Europäisches Patentamt

European Patent Office

Office européen des brevets

(19)

(11) **EP 0 547 696 B1**

## (12) FASCICULE DE BREVET EUROPEEN

(45) Date de publication et mention
de la délivrance du brevet:
**21.04.1999 Bulletin 1999/16**

(51) Int Cl.⁶: **H04N 1/40**, H04L 25/00,
H04L 12/00, H04N 7/24

(21) Numéro de dépôt: **92203867.4**

(22) Date de dépôt: **10.12.1992**

(54) **Système de transmission et/ou stockage de signaux correspondant à des images texturées**

System zum Übertragen und/oder Speichern von Signalen von texturierten Bildern

System for the transmission and/or storage of signals corresponding to textured images

(84) Etats contractants désignés:
**DE FR GB**

(30) Priorité: **18.12.1991 FR 9115724**
**23.12.1991 FR 9116034**

(43) Date de publication de la demande:
**23.06.1993 Bulletin 1993/25**

(73) Titulaires:
• **LABORATOIRES D'ELECTRONIQUE PHILIPS
S.A.S.**
**94450 Limeil-Brévannes (FR)**
Etats contractants désignés:
**FR**
• **Koninklijke Philips Electronics N.V.**
**5621 BA Eindhoven (NL)**
Etats contractants désignés:
**DE GB**

(72) Inventeurs:
• **Sirat, Jacques, Société Civile S.P.I.D.**
**F-75008 Paris (FR)**
• **Oddou, Christophe, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 296 608** **EP-A- 0 421 186**
**EP-A- 0 437 002** **EP-A- 0 454 234**

• **IEEE TRANSACTIONS ON COMMUNICATIONS
vol. 36, no. 8, August 1988, NEW YORK, US
pages 957 - 971 N. M. NASRABADI 'Image Coding
Using Vector Quantization: A Review'**
• **ALTA FREQUENZA vol. 58, no. 3, May 1989,
MILANO, IT pages 277 - 285 DANIELE D. GIUSTO
ET AL. 'High-Performance Image Coding:
Integration of Different Techniques by a
Knowledge-Based Recognition system'**
• **ELECTRONICS LETTERS vol. 26, no. 18, August
1990, STEVENAGE, GB pages 1483 - 1484 L.
CORTE-REAL ET AL. 'VECTOR QUANTISATION
OF IMAGE SEQUENCES USING VARIABLE SIZE
AND VARIABLE SHAPE BLOCKS'**
• **IEEE TRANSACTIONS ON COMMUNICATIONS
vol. 38, no. 11, November 1990, NEW YORK, US
pages 2073 - 2078 ITS'HAK DINSTEIN ET AL.
'Variable Block-Size Transform Image Coder'**

## Description

La présente invention concerne un dispositif de transmission et/ou stockage de signaux de texture disponibles sous la forme de signaux numériques correspondant à la luminosité des points d'une image, ainsi qu'un dispositif de synthèse de signaux de texture pour une utilisation dans un tel dispositif de transmission et/ou stockage. Elle concerne également un système de transmission et/ou stockage de signaux correspondant à des images au moins en partie texturées. On entend ici par texture une région d'image qui est homogène par son aspect, même si elle n'est pas rigoureusement uniforme. Une telle invention est applicable dans tous les domaines où la compression d'informations est avantageuse, et notamment dans des produits tels que le "compact disc" interactif, le Minitel, le visiophone ou le magnétoscope numérique, ou bien encore en télévision à haute définition ou en imagerie médicale.

En matière de transmission et/ou de stockage de données d'image, la réduction du nombre de ces données présente toujours un grand intérêt. Les méthodes de compression de données actuellement utilisées traitent l'image comme un ensemble de signaux bidimensionnels, sans faire d'hypothèses supplémentaires sur la nature de ces signaux. On peut citer par exemple la méthode qui consiste à subdiviser l'image en blocs réguliers regroupant un nombre déterminé de points d'image (ou pixels) et à appliquer aux signaux qui correspondent à ces blocs une transformation orthogonale puis un codage à longueur variable. Le brevet des Etats-Unis d'Amérique n° 4 394 774 décrit un système de compression de données numériques mettant en oeuvre une telle méthode et permettant ainsi de restituer ultérieurement des signaux correspondant aux signaux d'origine, en minimisant un critère d'erreur moyen par bloc. Une telle approche, satisfaisante à haut débit (environ 1 bit par pixel), ne l'est cependant plus à des débits plus bas, où l'on constate l'apparition d'artefacts rédhibitoires tels que des effets de blocs ou un effet de flou dû à l'élimination des hautes fréquences.

Un but de l'invention est donc de proposer un dispositif qui tienne au contraire compte de la nature même des signaux à transmettre et/ou à stocker pour mettre en oeuvre une méthode spécifique de codage, tout à fait économique à la fois en nombre de données transmises et en temps de calcul.

A cet effet l'invention concerne un dispositif de transmission et/ou de stockage caractérisé en ce qu'il comprend :

(A) un étage d'extraction, à partir desdits signaux de texture d'une région d'image déterminée, d'un échantillon de référence, représentatifs des motifs de cette texture ;
(B) un étage de codage comprenant lui-même des circuits de codage d'une part des signaux d'échantillon et d'autre part de signaux dits de région et représentatifs de façon plus rudimentaire des signaux de texture correspondant à la région entière dont a été extrait l'échantillon, les signaux ainsi codés étant destinés à des moyens de transmission et/ou stockage ;
(C) en sortie de ceux-ci, un étage de décodage desdits signaux codés, suivi d'un étage de restitution d'une image de synthèse correspondant à la texture d'origine présente à l'entrée dudit dispositif pour la région d'image concernée, ledit étage de restitution comprenant lui-même un circuit de constitution de dictionnaire à partir de blocs de taille identique considérés dans les signaux d'échantillon décodés et un circuit de décoration des signaux de région décodés à l'aide des signaux de sortie dudit circuit de constitution de dictionnaire. La reconstitution de signaux ainsi autorisée s'avère aussi fiable qu'avec les techniques antérieures.

La structure du dispositif ainsi proposée utilise le fait que les signaux à coder sont des signaux de texture présentant un certain effet de répétition pour en extraire un échantillon représentatif et ne coder, de la région de texture concernée, que ledit échantillon, une image complète correspondant à l'image d'origine n'étant restituée qu'après décodage des signaux d'échantillon codés.

Le document EP-A-454234 décrit, certes, un appareil qui permet de transmettre et/ou de stocker des signaux qui correspondent à des images texturées. Il est manifeste, cependant, que le principe de base de cet appareil est de produire et de traiter une carte des contours de l'image originale, par l'intermédiaire d'une opération qui consiste à prédire le quatrième élément d'un spécimen regroupant trois éléments d'image. La prédiction ainsi effectuée permet de détecter la présence ou non d'un contour, ainsi que sa position et sa direction. A la suite de cette prédiction, un signal d'erreur de prédiction peut être codé et transmis, les opérations inverses étant effectuées à la réception. Ce principe de base et ces opérations sont sans rapport avec la solution technique ici décrite, qui ne fait appel à aucune sorte de prédiction mais propose simplement une méthode originale de codage de texture exploitant le fait que des motifs réapparaissent dans une texture avec une périodicité donnée ou aléatoire et que l'information visuelle correspondante peut donc être décomposée en échantillons de texture (ou information à échelle faible) et en un canevas (ou information à grande échelle) indiquant l'exacte position de ces éléments.

Dans un mode particulier de réalisation, l'invention concerne un dispositif de transmission et/ou stockage caractérisé en ce que :

(a) l'étage d'extraction d'échantillon est un circuit d'extraction d'un échantillon de référence représentatif de la texture à transmettre et/ou stocker ;
(b) l'étage de codage comprend un circuit de codage des signaux de sortie dudit circuit d'extraction, correspondant à l'échantillon ainsi extrait, et un circuit de codage des signaux de région correspondant à ladite région entière ;

(c) l'étage de décodage comprend, en parallèle en sortie desdits moyens de transmission et/ou de stockage, des circuits de décodage respectivement des signaux d'échantillon codés et des signaux de région codés.

Avec la structure ainsi proposée, on obtient d'une part une image de synthèse approximative qui, après codage, permet de restituer de façon approchée les caractéristiques de la texture de la région considérée, et d'autre part des informations qui tiennent compte de la nature particulière des signaux d'origine - région homogène en texture - pour affiner le rendu relativement rudimentaire de cette texture, par une sorte de décoration, en complétant l'image approximative par la restitution des motifs avec pratiquement la même finesse que dans l'échantillon et aux mêmes emplacements. Si l'image d'origine comprend différentes régions de texture distincte, chacune de ces régions est traitée de manière similaire pour la restitution de chacune des textures.

Dans un autre mode particulier de réalisation, l'invention concerne également un dispositif de transmission et/ou stockage,
caractérisé ce que :

(a) l'étage d'extraction d'échantillon comprend un circuit d'extraction d'un échantillon de référence représentatif de la texture à transmettre et/ou stocker, suivi d'un circuit de constitution de dictionnaire à partir de blocs de taille identique considérés dans les signaux d'échantillon ;
(b) l'étage de codage comprend un circuit de codage des signaux de sortie dudit circuit d'extraction, correspondant à l'échantillon ainsi extrait, et un circuit de codage par quantification vectorielle desdits signaux de texture à l'aide dudit circuit de constitution de dictionnaire ;
(c) l'étage de décodage comprend, en parallèle en sortie desdits moyens de transmission et/ou de stockage, un circuit de décodage des signaux d'échantillon codés et un circuit de décodage par quantification vectorielle ;
(d) l'étage de restitution comprend, en sortie dudit circuit de décodage des signaux d'échantillon codés, un circuit de reconstitution de dictionnaire, ledit décodage par quantification vectorielle étant prévu à partir d'une part des signaux de sortie du circuit de codage par quantification vectorielle, tels que transmis et/ou stockés, et d'autre part des signaux de sortie dudit circuit de reconstitution de dictionnaire, en vue de la restitution d'une image de synthèse correspondant à la texture d'origine présente à l'entrée du dispositif.

Par comparaison avec les codeurs par quantification vectorielle habituels, la structure ainsi proposée présente l'avantage d'une plus grande simplicité et d'un coût de codage nettement plus faible en raison de la forme compacte du dictionnaire. En effet, les méthodes habituelles d'extraction de dictionnaire sont coûteuses en temps de calcul (largement supérieur à une minute sur les stations de travail usuelles). Dans le cas d'images contenant des textures, il n'est donc pas envisageable de calculer un dictionnaire pour chaque texture dans un dispositif de compression de données qui fonctionnerait en temps réel (typiquement 25 images/seconde). Il n'est pas plus envisageable de transmettre un nouveau dictionnaire à chaque nouvelle texture si le supplément en coût de codage est trop important. Les dictionnaires habituellement constitués comportent par exemple 1024 mots de 8 x 8 pixels, soit 65536 pixels. On voit donc, dans ce cas, que le gain en débit ne devient intéressant qu'à partir d'une taille d'image largement supérieure à 65536 pixels (= une image de 256 x 256 pixels ne comprenant qu'une seule texture) ; au contraire, dans le cas de l'invention, pour un échantillon de 40 x 40 = 1600 pixels contenant 32 x 32 = 1024 mots de 8 x 8 pixels, le gain en débit est significatif au dessus de 1600 pixels et l'on code donc avec bénéfice des régions texturées de taille 40 fois plus petite que précédemment.

Un autre but de l'invention est enfin de proposer un système de transmission et/ou stockage de signaux correspondant à des images au moins en partie texturées.

L'invention concerne à cet effet un système comprenant au moins un dispositif de transmission et/ou stockage de l'un des types qui viennent d'être décrits et qui est en outre caractérisé en ce qu'il comprend également :

(1) un circuit de séparation de l'image courante d'entrée en deux sous-images contenant l'une les parties texturées de ladite image et l'autre ses parties non texturées ;
(2) un circuit de segmentation de ladite sous-image texturée en régions homogènes en texture éventuellement non connexes, dont les signaux de sortie sont fournis audit dispositif ;
(3) un circuit de codage des contours desdites régions homogènes en texture et un circuit de codage de la sous-image non texturée, ainsi que, après transmission et/ou stockage, un circuit de décodage desdits contours et un circuit de décodage des signaux de sous-image non texturée ;
(4) un circuit de reconstruction d'une image finale correspondant à ladite image courante d'entrée, à partir des signaux de sortie desdits circuits de décodage et dudit dispositif.

Les particularités et avantages de l'invention apparaîtront maintenant de façon plus détaillée dans la description qui suit et sur les dessins annexés, donnés à titre d'exemples non limitatifs et dans lesquels :

- les figures 1 et 3 montrent respectivement un premier et un deuxième mode de réalisation d'un dispositif de transmission et/ou de stockage de signaux de texture selon l'invention ;
- les figures 2 et 4 montrent chacune un exemple de réalisation d'un système complet de transmission et/ou stockage comprenant au moins un dispositif tel que celui de la figure 1 ou de la figure 3 respectivement.

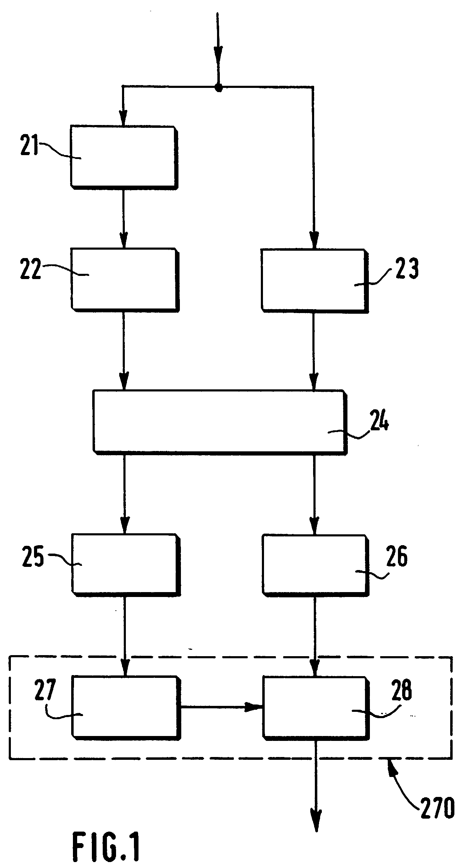

Dans ledit premier mode de réalisation, le dispositif représenté sur la figure 1 comprend tout d'abord un circuit 21 d'extraction d'un échantillon de la région considérée (homogène en texture), les informations relatives à cette région étant disponibles sous la forme de signaux numériques correspondant à la luminosité des pixels. Le principe de base de l'invention est en effet de considérer que, du fait de cette constitution particulière de ladite région, toute l'information concernant sa texture peut être considérée comme contenue dans un échantillon qui en est représentatif, et qui va permettre, ultérieurement, de restituer l'image de toute la région de texture déterminée en utilisant simplement les motifs de l'échantillon, donnés avec une certaine résolution, et la disposition relative de ces motifs.

Le dispositif de la figure 1 comprend également un circuit 22 de codage des signaux correspondant à l'échantillon ainsi extrait, prévu en sortie du circuit 21, ainsi qu'un circuit 23 de codage de la région entière dont a été extrait l'échantillon, recevant les signaux d'entrée du dispositif. Après transmission et/ou stockage des signaux codés de sortie des circuit 22 et 23 (par l'intermédiaire de moyens référencés 24 sur la figure, tel que canal de transmission ou magnétoscope par exemple), un circuit 25 de décodage des signaux d'échantillon codés et un circuit 26 de décodage des signaux de région codés transmettent leurs signaux de sortie à un dispositif 270 de synthèse de texture. Ce dispositif 270 comprend lui-même tout d'abord un circuit 27 de constitution de dictionnaire, qui, dans le cas présent, construit à partir des signaux de sortie du circuit de décodage 25 un dictionnaire de blocs en prenant par exemple tous les blocs inclus dans l'échantillon et en les indexant par la translation correspondante. L'information de translation est donnée par exemple par la position du pixel situé en haut et à gauche du bloc par rapport à celle du pixel situé en haut et à gauche de l'échantillon. Le dictionnaire peut bien entendu être constitué en utilisant à partir des blocs inclus dans l'échantillon d'autres transformations géométriques que des translations, et ces blocs de l'échantillon sont alors indexés par le ou les paramètres caractéristiques de cette autre transformation choisie.

Le dispositif 270 comprend aussi un circuit 28 dit de décoration, qui reçoit d'une part les signaux de sortie de ce circuit 27 et d'autre part les signaux décodés de sortie du circuit 26. Ces signaux décodés fournis par le circuit 26 permettent la reconstitution d'une image de synthèse approximative, dans laquelle chaque bloc est alors remplacé par un bloc du dictionnaire en fonction d'un critère prédéterminé, tel que celui qui consiste à chercher le bloc le plus proche suivant un critère de distance, en minimisant par exemple la distance quadratique :

$$Dist = \sum_{x,y} (I^{dict}(x,y) - I(x,y))^2$$

où x, y sont les coordonnées des pixels (la somme est effectuée sur tous les pixels du bloc) et I et $I_{dict}$ désignent respectivement la luminosité du pixel de l'image de synthèse approximative et celle du pixel correspondant dans le dictionnaire.

Pour les blocs de l'image de synthèse approximative qui recouvrent le bord de la région, on n'effectue qu'une corrélation partielle avec les mots du dictionnaire, seuls les pixels de la région étant pris en compte pour le calcul de la distance. Lorsque tous ces remplacements de blocs sont achevés, l'image de synthèse approximative est remplacée par une image de synthèse définitive qui constitue la sortie à la fois du dispositif de synthèse de texture et du dispositif de transmission et/ou stockage et qui correspond à la texture d'origine présente à l'entrée de ce dispositif de transmission et/ou stockage.

La présente invention n'est pas limitée à ce dispositif de transmission et/ou stockage, mais concerne aussi le dispositif de synthèse de texture considéré en lui-même. En effet, lorsque des signaux sont disponibles sous la forme de signaux correspondant d'une part à une image de synthèse approximative de la texture, assurant un rendu relativement rudimentaire de la totalité de la région de texture considérée, et d'autre part à un échantillon local représentatif de manière beaucoup plus fine de l'ensemble des motifs présents dans ladite texture, le dispositif de synthèse constitué du circuit 27 de constitution de dictionnaire et du circuit 28 de décoration assure la restitution d'une image texturée de façon conforme à l'invention, en ce sens qu'il permet d'affiner le rendu de toute une image, constituée dans un premier temps à l'aide d'informations relativement rudimentaires, à partir d'informations plus fines extraites localement.

Par ailleurs, lorsque l'image d'origine comprend différentes régions de textures distinctes (ces régions n'étant d'ailleurs pas nécessairement connexes), le circuit d'extraction est prévu pour former un nombre d'échantillons égal à celui des régions, les échantillons représentatifs ainsi sélectionnés étant alors traités comme précédemment pour conduire, après transmission et/ou stockage, à autant d'opérations de synthèse de texture qu'il y a d'échantillons extraits. Ces opérations de synthèse de texture sont alors assurées par exemple soit par un dispositif de synthèse unique réactivé pour chaque lot de signaux décodés correspondant à chaque échantillon d'origine, soit par plusieurs dispositifs de synthèse prévus en parallèle et recevant chacun respectivement le lot de signaux décodés correspondant à un seul échantillon d'origine.

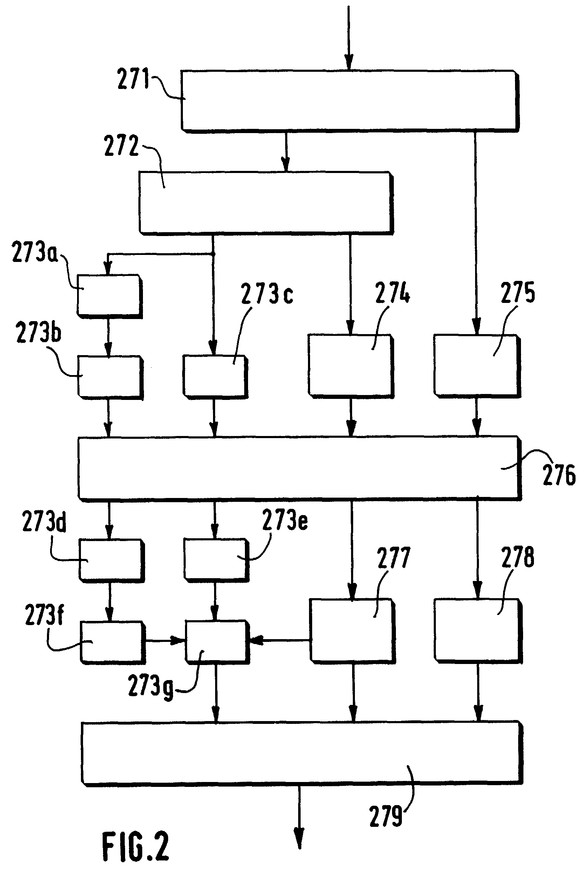

La figure 2 montre, par ailleurs, un exemple de réalisation d'un système de transmission et/ou stockage de signaux de texture appartenant à des images, comprenant un dispositif tel que décrit précédemment. Ce système comprend ici tout d'abord un circuit 271 de séparation de l'image courante d'entrée du système en deux sous-images dites texturée et non texturée contenant la première les parties texturées de ladite image et la seconde ses parties non texturées. La seconde sous-image peut être obtenue par exemple à l'aide d'un filtre passe-bas, et la première sous-image en est déduite par différence avec l'image avant séparation, ce filtrage et cette soustraction étant les fonctions exécutées par le circuit 271.

La sous-image texturée est alors envoyée vers un circuit 272 de segmentation de cette sous-image en régions homogènes en texture (par exemple selon la méthode décrite dans la communication "Unsupervised segmentation of textured images", de X. Michel, R. Leonardi et A. Gersho, SPIE vol.1001, Visual Communication and Image Processing 88, pp.582-590). Ce circuit 272 envoie les différentes textures ainsi constituées vers un dispositif de synthèse de texture du type de celui qui a été décrit en référence à la figure 1 et qui comprend donc des éléments similaires, à savoir : un circuit 273a d'extraction d'échantillons, un circuit 273b de codage des signaux correspondant à chacun des échantillons extraits, un circuit 273c de codage des régions d'où ont été extraits les échantillons, des moyens de transmission et/ou stockage des signaux codés, un circuit 273d de décodage des signaux d'échantillons codés, un circuit 273e de décodage des signaux de région codés, un circuit 273f de constitution de dictionnaire, et un circuit 273g de décoration.

Le circuit de segmentation 272 envoie également vers un circuit 274 de codage de contours les contours des régions homogènes en texture. Ce circuit 274 code ces différents contours par exemple selon la méthode décrite dans la thèse de R. Leonardi, Ecole Polytechnique de Lausanne, Suisse, n° 691, 1987, et les signaux ainsi codés sont fournis à des moyens de transmission et/ou stockage. Enfin, un circuit 275 de codage de la sous-image non texturée, reçue directement du circuit de séparation 271, fournit un troisième ensemble de signaux codés à des moyens de transmission et/ou stockage. Ces moyens présents en sortie des circuits 273b et 273c et des circuits 274 et 275 sont, sur la figure 2, regroupés en une seule représentation et référencés 276.

Ayant ainsi transmis et/ou stocké les divers signaux codés qui leur sont fournis, ces moyens 276 délivrent alors des signaux à décoder qui sont d'une part les signaux d'échantillons, fournis comme on l'a dit plus haut au circuit 273d de décodage des signaux d'échantillon codés, et les signaux de région codés, fournis au circuit 273e de décodage des signaux de région codés, d'autre part les signaux de contours de textures, fournis à un circuit 277 de décodage des contours codés par le circuit 274, et enfin les signaux de sous-image non texturée, fournis à un circuit 278 de décodage de la sous-image non texturée codée par le circuit 275. Les signaux de contours décodés sont également fournis au circuit 273g de décoration. Les textures synthétisées en sortie du circuit 273g, les contours restitués par le circuit 277, et la, sous-image reconstituée en sortie du circuit 278 sont alors fournis à un circuit 279 de reconstruction d'image finale, qui exécute les opérations inverses de celles effectuées par les circuits de séparation 271 et de segmentation 272 et délivre une image finale correspondant à l'image courante reçue à l'entrée dudit circuit 271.

On signalera enfin que la constitution de dictionnaire a été réalisée en considérant des blocs de taille déterminée, par exemple de taille 8x8 pixels, mais que la restitution de l'image de synthèse définitive peut être encore améliorée en renouvelant la constitution de dictionnaire et la décoration subséquente avec des blocs de taille différente, de préférence d'une taille incommensurable avec la précédente. Cette variante permet une amélioration du rendu de la texture, par l'élimination des effets de bloc résiduels.

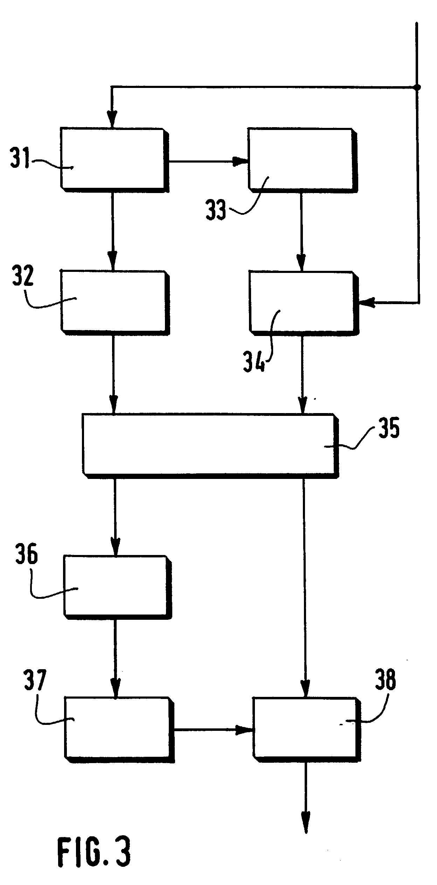

Dans le deuxième mode de réalisation représenté sur la figure 3, le dispositif selon l'invention comprend tout d'abord un circuit 31 d'extraction d'un échantillon de la région considérée (homogène en texture), tout à fait similaire au circuit 21. Le dispositif comprend également, en sortie du circuit 31, un circuit 32 de codage des signaux correspondant à l'échantillon ainsi extrait et un circuit 33 de constitution de dictionnaire, qui, dans le cas présent, construit à partir des signaux de sortie du circuit 31 un dictionnaire de blocs en prenant par exemple tous les blocs inclus dans l'échantillon et en les indexant par la translation correspondante. L'information de translation est donnée, comme précédemment, par exemple par la position du pixel situé en haut et à gauche du bloc par rapport à celle du pixel situé en haut et à gauche de l'échantillon. Là encore, le dictionnaire peut être constitué en utilisant à partir des blocs inclus dans l'échantillon d'autres transformations géométriques que des translations, les blocs de l'échantillon étant alors indexés par le ou les paramètres caractéristiques de cette autre transformation choisie.

Le dispositif comprend aussi un circuit 34 de codage par quantification vectorielle, recevant d'une part les signaux d'entrée du dispositif lui-même et d'autre part les signaux de sortie du circuit 33. Au cours de ce codage, pour les blocs qui recouvrent le bord de la région texturée, on n'effectue qu'une corrélation partielle avec les mots du dictionnaire, seuls les pixels situés à l'intérieur de cette région étant pris en compte.

Après transmission et/ou stockage des signaux codés de sortie des circuits 32 et 34 (par l'intermédiaire de moyens référencés 35 sur la figure 3, tel que canal de transmission ou magnétoscope par exemple), le dispositif comprend un circuit 36 de décodage des signaux d'échantillon codés. Ce circuit 36 transmet ses signaux de sortie à un circuit 37 de reconstitution de dictionnaire, qui, comme précédemment pour le circuit 33, reconstruit à partir des signaux de sortie du circuit de décodage 36 le dictionnaire de blocs en prenant tous les blocs inclus dans l'échantillon et en les indexant par la translation correspondante (l'information de translation est fournie comme précédemment), ou par le ou les paramètres caractéristiques de la transformation géométrique choisie. Le dispositif comprend enfin un circuit 38 de décodage par quantification vectorielle, qui reçoit d'une part les signaux de sortie du circuit 37 (blocs du dictionnaire) et d'autre part les signaux codés (numéros de blocs) de sortie du circuit 34 après leur transmission par les moyens 35, et délivre une image de synthèse qui est l'image de sortie du dispositif et qui correspond à la texture d'origine présente à l'entrée de ce dispositif de transmission et/ou de stockage.

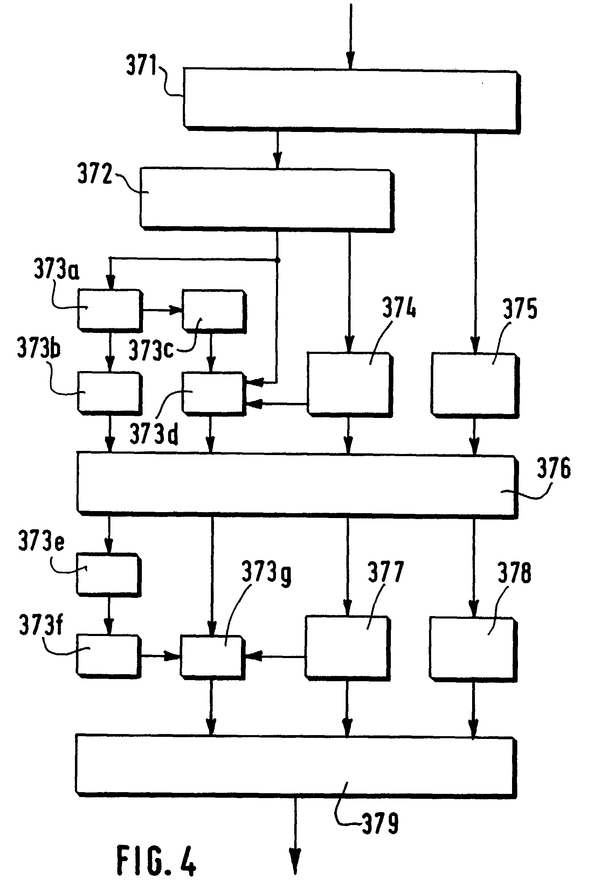

Là encore, des variantes peuvent être proposées sans pour cela sortir du cadre de cette invention. En particulier, lorsque l'image d'origine comprend différentes régions de textures distinctes (chacune de ces régions n'étant d'ailleurs pas nécessairement connexe), le circuit d'extraction est prévu pour former un nombre d'échantillons égal à celui des régions. Les échantillons représentatifs ainsi sélectionnés sont alors traités comme précédemment pour conduire, après transmission et/ou stockage, à autant d'opérations de synthèse de texture qu'il y a d'échantillons extraits. La figure 4 montre un exemple de réalisation d'un système de transmission et/ou stockage de signaux de texture appartenant à des images. Ce système comprend, de façon similaire à ce qui a été décrit en référence à la figure 2, un circuit 371 de séparation de l'image courante d'entrée du système en deux sous-images dites texturée et non texturée contenant la première les parties texturées de ladite image et la seconde ses parties non texturées. La seconde sous-image peut être obtenue par exemple à l'aide d'un filtre passe-bas, et la première sous-image en est déduite par différence avec l'image avant séparation, ce filtrage et cette soustraction étant les fonctions exécutées par le circuit 371.

La sous-image texturée est, comme précédemment, envoyée vers un circuit 372 de segmentation de cette sous-image en régions homogènes en texture. Ce circuit 372 envoie les différentes textures ainsi constituées vers un dispositif de synthèse de texture du type de celui qui a été décrit précédemment en référence à la figure 3 et qui comprend donc des éléments similaires, à savoir : un circuit 373a d'extraction d'échantillons, un circuit 373b de codage des signaux correspondant à chacun des échantillons extraits, un circuit 373c de constitution de dictionnaire, un circuit 373d de codage par quantification vectorielle, des moyens de transmission et/ou stockage des signaux codés, un circuit 373e de décodage des signaux d'échantillons codés, un circuit 373f de reconstitution de dictionnaire, et un circuit 373g de décodage par quantification vectorielle.

Le circuit de segmentation 372 envoie les contours des régions homogènes en texture vers un circuit 374 de codage de ces différents contours, et les signaux ainsi codés sont fournis au circuit 373d et à des moyens de transmission et/ou stockage. Enfin, un circuit 375 de codage de la sous-image non texturée, reçue directement du circuit de séparation 371, fournit un troisième ensemble de signaux codés à des moyens de transmission et/ou stockage. Ces moyens présents en sortie des circuits 373b et 373d et des circuits 374 et 375 sont, sur la figure 4, regroupés comme précédemment en une seule représentation et référencés 376.

Ayant transmis et/ou stocké les divers signaux codés qui leur sont fournis, ces moyens 376 délivrent des signaux à décoder qui sont d'une part les signaux d'échantillons, fournis comme on l'a dit plus haut au circuit 373e de décodage des signaux d'échantillon codés, et les signaux issus du codage par quantification vectorielle et fournis au circuit 373g de décodage par quantification vectorielle, d'autre part les signaux de contours de textures, fournis à un circuit 377 de décodage des contours codés par le circuit 374, et enfin les signaux de sous-image non texturée, fournis à un circuit 378 de décodage de la sous-image non texturée codée par le circuit 375. Les textures synthétisées en sortie du circuit 373g, les contours restitués par le circuit 377 et également fournis au circuit 373g de décoration, et la sous-image reconstituée en sortie du circuit 378 sont fournis à un circuit 379 de reconstruction d'image finale, qui exécute les opérations inverses de celles effectuées par les circuits de séparation 371 et de segmentation 372 et délivre une image finale correspondant à l'image courante reçue à l'entrée dudit circuit 371.

On signalera comme précédemment que la constitution de dictionnaire a été réalisée en considérant des blocs de taille déterminée (par exemple de taille 8 x 8 pixels), mais que la restitution de l'image de synthèse définitive peut, là aussi, être améliorée en renouvelant les opérations de constitution ou reconstitution de dictionnaire et les opérations de codage/décodage par quantification vectorielle avec des blocs de taille différente pour l'élimination des effets de bloc résiduels.

**Revendications**

1. Dispositif de transmission et/ou stockage de signaux de texture disponibles sous la forme de signaux numériques correspondant à la luminosité des points d'une image, caractérisé en ce qu'il comprend :

    (A) un étage d'extraction (21), à partir desdits signaux de texture d'une région d'image déterminée, d'un échantillon de référence représentatif des motifs de cette texture ;

(B) un étage de codage (22, 23) comprenant lui-même des circuits de codage d'une part des signaux d'échantillon et d'autre part de signaux dits de région et représentatifs de façon plus rudimentaire des signaux de texture correspondant à la région entière dont a été extrait l'échantillon, les signaux ainsi codés étant destinés à des moyens de transmission et/ou stockage ;

(C) en sortie de ceux-ci, un étage de décodage (25, 26) desdits signaux codés, suivi d'un étage de restitution (270) d'une image de synthèse correspondant à la texture d'origine présente à l'entrée dudit dispositif pour la région d'image concernée, comprenant lui-même un circuit (27) de constitution de dictionnaire à partir de blocs de taille identique considérés dans les signaux d'échantillon décodés et un circuit (28) de décoration des signaux de région décodés à l'aide des signaux de sortie dudit circuit de constitution de dictionnaire.

2. Dispositif selon la revendication 1, caractérisé en ce que:

(a) l'étage d'extraction d'échantillon est un circuit (21) d'extraction d'un échantillon de référence représentatif des motifs de la texture à transmettre et/ou stocker ;

(b) l'étage de codage comprend un circuit (22) de codage des signaux de sortie dudit circuit d'extraction, correspondant à l'échantillon ainsi extrait, et un circuit (23) de codage des signaux de région correspondant à ladite région entière ;

(c) l'étage de décodage comprend, en parallèle en sortie desdits moyens de transmission et/ou de stockage, des circuits (25,26) de décodage respectivement des signaux d'échantillon codés et des signaux de région codés.

3. Dispositif selon l'une des revendications 1 et 2, caractérisé en ce que ledit dispositif (270) de synthèse de texture formé par le circuit (27) de constitution de dictionnaire et le circuit (28) de décoration est prévu pour renouveler les opérations de constitution de dictionnaire et de décoration à partir d'au moins une série de blocs de taille différente des précédents.

4. Dispositif selon l'une des revendications 2 et 3, dans lequel les signaux numériques correspondent à la luminosité des points d'une image comprenant différentes régions de textures distinctes, caractérisé en ce qu'il comprend un circuit d'extraction d'autant d'échantillons que de régions de textures distinctes, et un dispositif de synthèse de texture prévu pour effectuer autant d'opérations de synthèse de texture qu'il y a d'échantillons ainsi extraits.

5. Dispositif selon la revendication 1, caractérisé ce que :

(a) l'étage d'extraction d'échantillon comprend un circuit (31) d'extraction d'un échantillon de référence représentatif de la texture à transmettre et/ou stocker, suivi d'un circuit (33) de constitution de dictionnaire à partir de blocs de taille identique considérés dans les signaux d'échantillon ;

(b) l'étage de codage comprend un circuit (32) de codage des signaux de sortie dudit circuit d'extraction, correspondant à l'échantillon ainsi extrait, et un circuit (34) de codage par quantification vectorielle desdits signaux de texture à l'aide dudit circuit de constitution de dictionnaire ;

(c) l'étage de décodage comprend, en parallèle en sortie desdits moyens de transmission et/ou de stockage, un circuit (36) de décodage des signaux d'échantillon codés et un circuit (38) de décodage par quantification vectorielle ;

(d) l'étage de restitution comprend, en sortie dudit circuit (37) de décodage des signaux d'échantillon codés, un circuit de reconstitution de dictionnaire, ledit décodage par quantification vectorielle étant prévu à partir d'une part des signaux de sortie du circuit de codage par quantification vectorielle, tels que transmis et/ou stockés, et d'autre part des signaux de sortie dudit circuit de reconstitution de dictionnaire, en vue de la restitution d'une image de synthèse correspondant à la texture d'origine présente à l'entrée du dispositif.

6. Dispositif selon la revendication 5, caractérisé en ce qu'il est prévu pour permettre le renouvellement des opérations de constitution de dictionnaire, de codage par quantification vectorielle, de reconstitution de dictionnaire et de décodage par quantification vectorielle à partir d'au moins une série de blocs de taille différente des précédents.

7. Dispositif selon l'une des revendications 5 et 6, dans lequel les signaux numériques correspondent à la luminosité des points d'une image comprenant différentes régions de textures distinctes, chacune d'elle étant éventuellement non connexe, caractérisé en ce que ses circuits sont prévus pour effectuer, à partir d'autant d'échantillons extraits que de textures distinctes, autant d'opérations de codage et de décodage de texture que d'échantillons transmis et/ou stockés.

8. Système de transmission et/ou stockage de signaux correspondant à des images au moins en partie texturées, ledit système comprenant au moins un dispositif selon l'une des revendications 2, 3, 5 et 6, caractérisé en ce qu'il comprend également :

(1) un circuit (271, 371) de séparation de l'image courante d'entrée en deux sous-images contenant l'une les parties texturées de ladite image et l'autre ses parties non texturées ;
(2) un circuit (272,372) de segmentation de ladite sous-image texturée en régions homogènes en texture dont les signaux de sortie sont fournis audit dispositif, chacune de ces régions étant éventuellement non connexe ;
(3) un circuit (274,374) de codage des contours desdites régions homogènes en texture et un circuit (275,375) de codage de la sous-image non texturée, ainsi que, après transmission et/ou stockage, un circuit (277,377) de décodage desdits contours et un circuit (278,378) de décodage des signaux de sous-image non texturée ;
(4) un circuit (279,379) de reconstruction d'une image finale correspondant à ladite image courante d'entrée, à partir des signaux de sortie desdits circuits de décodage et dudit dispositif.

**Patentansprüche**

1. Eine Vorrichtung zum Übertragen und/oder Speichern von Textursignalen, die in Form von numerischen Signalen verfügbar sind, welche der Helligkeit der Punkte eines Bildes entsprechen, die dadurch gekennzeichnet ist, daß sie folgendes umfaßt:

(A) eine Stufe (21), die aus den Textursignalen eines bestimmten Bildausschnitts ein Bezugsmuster gewinnt, das für die Motive der genannten Textur repräsentativ ist;
(B) eine Kodierstufe (22,23), die ihrerseits Kreise umfaßt, die einerseits Mustersignale und andererseits Ausschnittsignale genannte Signale kodieren, die aufrudimentärste Weise die Textursignale des gesamten Ausschnitts repräsentieren, aus dem das Muster gewonnen wurde, wobei die so kodierten Signale für die Mittel zum Übertragen und/oder Speichern bestimmt sind;
(C) an deren Ausgang eine Stufe (25,26) zum Dekodieren der genannten kodierten Signale, gefolgt durch eine Stufe (270) zur Wiederherstellung eines synthetischen Bildes, das der am Eingang der genannten Vorrichtung für den betreffenden Bildausschnitt vorhandenen Ursprungstextur entspricht, die ihrerseits einen Kreis (27) zur Erstellung eines Lexikons aus gleich großen Blöcken, die in den dekodierten Mustersignalen betrachtet werden, und einen Kreis (28) zur Dekoration der dekodierten Ausschnittsignale mit Hilfe der Ausgangssignale des genannten Kreises zur Erstellung eines Lexikons umfaßt.

2. Eine Vorrichtung nach Anspruch 1, dadurch gekennzeichnet, daß:

(a) die Mustergewinnungsstufe ein Kreis (21) zum Gewinnen eines Bezugsmusters ist, das die Motive der Textur repräsentiert, die übertragen oder gespeichert werden soll;
(b) die Kodierstufe einen Kreis (22) zum Kodieren der Ausgangssignale des genannten Mustergewinnungskreises, die dem so gewonnenen Muster entsprechen, und einen Kreis (23) zum Kodieren der Ausschnittsignale, die dem gesamten genannten Ausschnitt entsprechen, umfaßt;
(c) Die Kodierstufe parallel am Ausgang der genannten Mittel zum übertragen und/oder Speichern Kreise (25,26) zum Dekodieren der kodierten Mustersignale bzw. der kodierten Ausschnittsignale umfaßt.

3. Eine Vorrichtung nach einem der Ansprüche 1 und 2, dadurch gekennzeichnet, daß die genannte Vorrichtung (270) zur Textursynthese aus dem Kreis (27) zur Erstellung eines Lexikons und dem Dekorierkreis (28) besteht und so eingerichtet ist, daß sie die Erstellung des Lexikons und die Dekoration mit mindestens einer Reihe von Blöcken mit einer anderen Größe als zuvor wiederholt.

4. Eine Vorrichtung nach einem der Ansprüche 2 und 3, bei der die numerischen Signale der Helligkeit der Punkte eines Bildes entsprechen, das verschiedene Ausschnitte mit unterschiedlicher Textur umfaßt, dadurch charakterisiert, daß sie einen Kreis zum Gewinnen ebenso vieler Muster wie Ausschnitte mit verschiedener Textur umfaßt, sowie eine Textursynthesevorrichtung, die so eingerichtet ist, daß sie ebenso viele Textursynthesen ausführt, wie auf diese Weise Muster gewonnen wurden.

5. Eine Vorrichtung nach Anspruch 1, dadurch gekennzeichnet, daß:

(a) die Mustergewinnungsstufe einen Kreis (31) zum Gewinnen eines für die Textur, die übertragen und/oder gespeichert werden soll, repräsentativen Bezugsmusters umfaßt, gefolgt von einem Kreis (33) zur Erstellung eines Lexikons aus Blöcken identischer Größe aus den Mustersignalen;

(b) die Kodierstufe einen Kreis (32) zum Kodieren der Ausgangssignale des genannten Mustergewinnungskreises, die dem so gewonnenen Muster entsprechen, umfaßt, sowie einen Kreis (34) zum Kodieren durch vektorielles Quantifizieren der genannten Textursignale mit Hilfe des genannten Kreises zum Erstellen eines Lexikons;

(c) die Dekodierstufe parallel am Ausgang der genannten Mittel zum Übertragen und/oder Speichern einen Kreis (36) zum Dekodieren kodierter Mustersignale und einen Kreis (38) zum Dekodieren durch vektorielles Quantifizieren umfaßt;

(d) Die Wiederherstellungsstufe am Ausgang des genannten Kreises (37) zum Dekodieren kodierter Mustersignale einen Kreis zur Wiederherstellung des Lexikons umfaßt, wobei das genannte Dekodieren durch vektorielles Quantifizieren einerseits für die übertragenen und/oder gespeicherten Ausgangssignale des genannten Kreises zum Kodieren durch vektorielles Quantifizieren und andererseits für die Ausgangssignale des genannten Kreises zur Wiederherstellung des Lexikons vorgesehen ist, damit ein synthetisches Bild wiederhergestellt werden kann, das der ursprünglich am Eingang der Vorrichtung vorhandenen Textur entspricht.

6. Eine Vorrichtung nach Anspruch 5, dadurch gekennzeichnet, daß sie so eingerichtet ist, daß sie es ermöglicht, die Erstellung eines Lexikons, das Kodieren durch vektorielles Quantifizieren, das Wiederherstellen des Lexikons und das Dekodieren durch vektorielles Quantifizieren mit mindestens einer Serie von Blöcken mit einer anderen Größe als zuvor zu wiederholen.

7. Eine Vorrichtung nach einem der Ansprüche 5 und 6, bei dem die numerischen Signale der Helligkeit der Punkte eines Bildes entsprechen, das verschiedene Ausschnitte mit unterschiedlicher Textur umfaßt, die möglicherweise nicht zusammenhängend sind, dadurch gekennzeichnet, daß ihre Kreise so eingerichtet sind, daß sie für die gleiche Anzahl gewonnener Muster, wie verschiedene Texturen vorhanden sind, ebenso viele Texturkodier- und Texturdekodiervorgänge ausführen können, wie Muster übertragen und/oder gespeichert wurden.

8. Ein System zum Übertragen und/oder Speichern von Signalen, die mindestens teilweise texturierten Bildern entsprechen, wobei das genannte System mindestens eine Vorrichtung gemäß der Patentansprüche 2, 3, 5 und 6 umfaßt und dadurch gekennzeichnet ist, daß es auch folgendes umfaßt:

(1) einen Kreis (271,371) zum Trennen des laufenden Eingangsbildes in zwei Teilbilder, deren eines die texturierten Teile des genannten Bildes enthält und deren anderes seine nicht texturierten Teile;

(2) einen Kreis (272,372) zum Segmentieren des genannten texturierten Teilbildes in Ausschnitte mit homogener Textur, dessen Ausgangssignale an die genannte Vorrichtung geliefert werden, wobei jede dieser Regionen unzusammenhängend sein kann;

(3) einen Kreis (274,374) zum Kodieren der Konturen der genannten Ausschnitte mit homogener Textur und einen Kreis (275,375) zum Kodieren des nicht texturierten Teilbildes sowie nach dem Übertragen und/oder Speichern einen Kreis (277,377) zum Dekodieren der genannten Konturen und einen Kreis (278,378) zum Dekodieren der Signale des nicht texturierten Teilbilds;

(4) einen Kreis (279,379) zum Wiederherstellen eines Endbildes, das dem genannten laufenden Eingangsbild entspricht, aus den Ausgangssignalen der genannten Dekodierkreise und der genannten Vorrichtung.

## Claims

1. A device for transmitting and/or storing texture signals available in the form of digital signals corresponding to the luminosity of the pixels of a picture, characterized in that it comprises:

(A) a sampling stage (21) for deriving from said texture signals of a given picture area a reference sample which is representative of patterns of this texture;

(B) a coding stage (22, 23) comprising circuits for coding, on the one hand, sample signals and, on the other hand, so-called area signals which in a more rudimentary fashion are representative of texture signals corresponding to the entire area from which the sample has been taken, the output signals thus coded being intended for transmission and/or storage means;

(C) arranged at the output of said transmission and/or storage means, a decoding stage (25, 26) for said coded signals followed by a reconstruction stage (270) for a synthetic image corresponding to the original texture present at the input of this device for the entire image area under consideration, which stage comprises a circuit (27) for forming a dictionary from equal-size blocks considered in the decoded sample signals, and a circuit (28) for the decoration of the decoded area signals with the aid of the output signals of said dictionary-forming circuit.

**2.** A device as claimed in Claim 1, characterized in that:

(a) the sampling stage is a sampling circuit (21) for taking a reference sample representative of the texture to be transmitted and/or stored;
(b) the coding stage comprises a coding circuit (22) for coding the output signals of said sampling circuit, which output signals correspond to the sample thus taken, and a coding circuit (23) for the area signals corresponding to said entire area;
(c) the decoding stage comprises, arranged in parallel at the output of said transmission and/or storage means, decoding circuits (25, 26) for the coded sample signals and the coded area signals.

**3.** A device as claimed in one of the Claims 1 and 2, characterized in that said texture synthesis device (270) comprising the dictionary-forming circuit (27) and the decoration circuit (28) is adapted to repeat the dictionary-forming and decoration operations starting from at least one series of blocks of a size different from the preceding ones.

**4.** A device as claimed in one of the Claims 2 and 3, in which the digital signals corresponding to the luminosity of the pixels of a picture comprising different areas of distinct textures, characterized in that it comprises a sampling circuit for taking as many samples as there are areas of distinct textures, and a texture synthesis device adapted to perform as many texture synthesis operations as there are samples thus taken.

**5.** A device as claimed in Claim 1, characterized in that:

(a) the sampling stage comprises a sampling circuit (31) for taking a reference sample representative of the texture to be transmitted or stored, followed by a circuit (33) for forming a dictionary from equal-size blocks considered in the sample signals;
(b) the coding stage comprises a coding circuit (32) for coding the output signals of said sampling circuit which correspond to the sample thus taken, and a circuit (34) for coding said texture signals by vector quantization with the aid of said dictionary-forming circuit;
(c) the decoding stage comprises, arranged in parallel at the output of said transmission and/or storage means, a circuit (36) for decoding the coded sample signals and a circuit (38) for decoding by vector quantization;
(d) the reconstruction stage comprises a dictionary-reconstitution circuit at the output of said circuit (37) for decoding the coded sample signals, said decoding by vector quantization being effected on the basis of, on the one hand, output signals of the circuit for decoding by vector quantization, as transmitted and/or stored, and, on the other hand, output signals of said dictionary-reconstitution circuit, in order to reconstruct a synthetic picture corresponding to the original texture present at the input of the device.

**6.** A device as claimed in Claim 5, characterized in that it is adapted to repeat the operations of forming a dictionary, of coding by vector quantization, of reconstituting the dictionary and of decoding by vector quantization, starting from at least a series of blocks of a size different from the preceding ones.

**7.** A device as claimed in one of the Claims 5 and 6, in which the digital signals corresponding to the luminosity of the pixels of a picture comprising different areas of distinct textures, which may each be non-contiguous, characterized in that its circuits, starting from as many samples as there are distinct textures, are adapted to perform a number of texture coding and decoding operations equal to the number of samples transmitted and/or stored.

**8.** A system for transmitting and/or storing signals corresponding to at least partly textured pictures, which system comprises at least a device as claimed in any one of the Claims 2, 3, 5 and 6, characterized in that it further comprises:

(1) a circuit (271, 371) for splitting the current picture at the input into two sub-pictures, one of which comprises the textured parts and the other the non-textured parts of said picture;
(2) a circuit (272, 372) for the segmentation of said textured sub-picture into areas of homogeneous texture, which areas may each be non-contiguous, the output signals of this circuit being applied to said device,
(3) a circuit (274, 374) for coding the contours of said areas of homogeneous texture and a circuit (275, 375) for coding the non-textured sub-picture and, after transmission and/or storage, a circuit (277, 377) for decoding said contours and a circuit (278, 378) for decoding the signals corresponding to the non-textured sub-picture;
(4) a circuit (279, 379) for reconstructing from output signals of said decoding circuits and said device a final picture corresponding to said current picture at the input.

FIG.1

FIG.2

FIG. 3

FIG. 4